# EUROPEAN PATENT SPECIFICATION

(11) **EP 3 285 411 B1**
(45) Date of publication and mention of the grant of the patent: **05.08.2020**
(21) Application number: 16767677.4
(22) Date of filing: 08.03.2016
(51) Int. Cl.: H04L 12/12

(54) **METHOD FOR REGISTERING AN OPTICAL NETWORK UNIT TO AN OPTICAL LINE TERMINAL, APPARATUS FOR PROCESSING A REGISTERING OF AN OPTICAL NETWORK UNIT, AND OPTICAL LINE TERMINAL**
VERFAHREN ZUR REGISTRIERUNG EINER OPTISCHEN NETZWERKEINHEIT ZU EINEM OPTISCHEN LEITUNGSENDGERÄT, VORRICHTUNG ZUR VERARBEITUNG DER REGISTRIERUNG EINER OPTISCHEN NETZWERKEINHEIT, UND OPTISCHES LEITUNGSENDGERÄT
PROCÉDÉ D'ENREGISTREMENT D'UNE UNITÉ DE RÉSEAU OPTIQUE À UNE TERMINAISON DE LIGNE OPTIQUE, APPAREIL DE TRAITEMENT D'ENREGISTREMENT D'UNE UNITÉ DE RÉSEAU OPTIQUE, ET TERMINAISON DE LIGNE OPTIQUE

(30) Priority: 26.03.2015 CN 201510136058
(43) Date of publication of application: 21.02.2018
(73) Proprietor: ZTE Corporation, Shenzhen city, Guangdong 518057 (CN)
(72) Inventor: YU, Song, Shenzhen Guangdong 518057 (CN); FU, Huaming, Shenzhen Guangdong 518057 (CN)
(74) Representative: Regimbeau
(86) International application number: PCT/CN2016/075877
(87) International publication number: WO 2016/150300

(56) References cited:
- EP-A1- 1 684 447
- WO-A1-2013/094594
- CN-A- 101 197 637
- CN-A- 102 045 610
- CN-A- 102 571 461
- US-A1- 2005 019 033
- US-A1- 2008 056 720
- US-B1- 7 181 142

## Description

### TECHNICAL FIELD

The present invention relates to the field of communications and, in particular, to a method for registering an optical network unit to an optical line terminal, an apparatus for processing the registering of an optical network unit, and an optical line terminal.

### BACKGROUND

The Passive Optical Network, PON, technology is now the preferred technology in the field of optical access network, and has significant advantages in access rate, bandwidth efficiency, splitting ratio, full service carrying capacity and security. The PON technology is classified into Ethernet Passive Optical Network (EPON) and Gigabit-Capable PON (GPON). The EPON technology is standardized by the IEEE802.3 EFM Working Group. The GPON technology is proposed and standardized by the International Telecommunication Union Telecommunication Standardization Sector and G.984.x series of Recommendations are eventually formed.

For the EPON technology and the GPON technology, broadband access service types are the same and service configuration steps are substantially the same. PON currently offers service types including broadband Internet services, Voice over Internet Protocol, VoIP, and video services, etc. Service configuration processes are based on the respective standards. With respect to the PON level, the configuration starting point of a terminal-to-terminal service is a user port of the optical network unit, ONU, physical terminal and the end point is an uplink service port of an optical line terminal, OLT. The service configuration process is configuring a series of service data between the two points. The service data includes service classification (e.g., VLAN, priority and Ethernet type), Quality of Service, QoS, (e.g., traffic rate limit and priority queue mapping) and detailed configuration parameters of specific services (e.g., detailed VoIP voice-related parameters), etc.

Before delivering fiber to the home optical network unit, FTTH ONU, services, an operator needs to first complete infrastructure construction, including central office device ready and optical fibers/optical splitters placement. Currently, upon completion of a new residential area, the placement of optical fibers/optical splitters has been completed and optical fiber connectors have been configured in each house. Meanwhile, routing information about optical fibers from central office backbone fibers to optical splitters and then to optical fibers at client terminals has been recorded in the operator's Record Management System, RMS,. If supplemented with the intelligent optical distribution network technology, the RMS can acquire data that is more accurate and is substantially free of recording by hand.

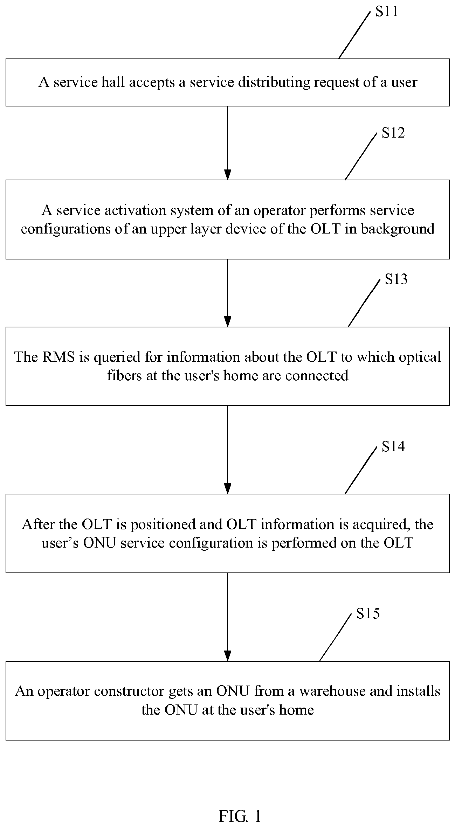

After the infrastructure construction is completed, the operator can accept service distributing requests of users. FIG. 1 illustrates a current typical service distributing process, including the following steps:
At S11: a service hall accepts a service distributing request of a user.
At S12: a service activation system of an operator performs service configurations of an upper layer device of the OLT in background. The service configurations mainly include broadband Internet service configuration on a Broadband Remote Access Server, BRAS" internet protocol television, IPTV, service configuration on an IPTV platform and voice service configuration on a soft switch platform.
At S13: the RMS is queried for information about the OLT to which optical fibers at the user's home are connected. The information mainly includes the IP address of the OLT device, a slot number of a broad and a PON port number.
At S14: after the OLT device is positioned and OLT information is acquired, the user's ONU service configuration is performed on the OLT device, which include Layer 2 protocol and PON-related configurations that provide basic support for OLT upper layer services. It is to be particularly noted that, according to a current typical PON service configuration process, the user's ONU unique identifier SN needs to be specified in this step. (For EPON, MAC or SN can serve as the ONU unique identifier according to standards. For GPON, PASSWORD or SN can serve as the ONU unique identifier according to standards. In addition, some operators may extend the standards and define other unique identifiers. For example, the China Telecom uses LOID as the ONU unique identifier. These unique identifiers are collectively called SN).
At S15: an operator constructor gets an ONU from a warehouse and installs the ONU at the user's home. Before installing the ONU, the constructor needs to first set the SN of the ONU to be consistent with the SN that was specified on the OLT. After the ONU is installed and powered, the ONU is registered with the OLT. In this case, the OLT detects that the SN of the ONU that has been configured before is consistent with the SN of the ONU that is being registered online, authentication is passed, configurations are associated on the OLT and then configuration data is delivered to the ONU. At this point, service distributing is substantially completed.

As can be seen from the above that the above service distributing process involves first querying RMS data, positioning the OLT network element, PON board and PON port, preconfiguring ONU configuration data items via an EMS, prerecording the SN of the ONU and ensuring consistent SNs of the ONU when the constructor starts the ONU at the user's home. When the ONU gets online for the first time, the OLT accepts the ONU and delivers the configuration data only after the OLT verifies that the SNs are consistent. This cumbersome process extends the service fulfillment time and reduces the service fulfillment efficiency. EP1684447(A1) teaches a method for dynamic bandwidth allocation in Passive Optical Network, which can satisfy requirements of different types of services, increase bandwidth utilization ratio and realize equal bandwidth allocation. The PON includes an OLT and a plurality of ONUs accessing to the OLT. The method includes: classifying traffic which is to be communicated between the OLT and the ONUs into a plurality of service types, and granting a different priority to each type of the services; authorizing service ports of every type of services to transmit service data in descending sequence of said priorities of the services, and recording granting information of the service ports obtained from the authorization; reading out said granting information of every to-be-granted service port of a same ONU; and scheduling granted start time of data transmission of every to-be-granted port of current ONU, generating downlink granting messages including both said granting information and said granted start time of data transmission of every granted port of said current ONU, transmitting said downlink granting messages to said current ONU.

### SUMMARY

An object of the present invention is to provide a method for registering an optical network unit to an optical line terminal, an apparatus for processing the registering of an optical network unit, and an optical line terminal to solve problems of a cumbersome ONU service information distributing process and low service fulfillment efficiency in the related art.

To achieve the above object, the present invention provides a method for distributing optical network unit service information, including:
acquiring a registration request of an optical network unit, ONU, to be registered, and acquiring a serial number, SN, of the ONU to be registered and port information about an optical line terminal, OLT, connected to the ONU to be registered according to the registration request; and
searching a service data table for data resources having a resource occupation identifier of a preset value, selecting one of the data resources having the resource occupation identifier of the preset value as a distributing resource and transmitting the distributing resource to the ONU to be registered. The resource occupation identifier of the preset value indicates that corresponding data resources are not occupied.

The step of selecting one of the data resources having the resource occupation identifier of the preset value as a distributing resource and transmitting the distributing resource to the ONU to be registered includes:
selecting the one of the data resources having the resource occupation identifier of the preset value;
replacing the resource occupation identifier corresponding to the selected data resource with the SN of the ONU to be registered, and taking the data resource having the replaced resource occupation identifier as the distributing resource; and
transmitting the distributing resource to the ONU to be registered.

Before the step of acquiring a registration request of an optical network unit, the method further includes:
configuring one service data table for each Passive Optical Network, PON, port of each PON board of the OLT. The service data table includes N data resources and N denotes a maximum splitting ratio of each PON port.

The method further includes:
searching in a predetermined cycle the service data table corresponding to each PON port of each PON board for a first data resource having the resource occupation identifier not of the preset value;
acquiring a login state of an ONU corresponding to the resource occupation identifier of the first data resource if the first data resource exists in the service data table; and
changing the resource occupation identifier of the first data resource to the preset value if the login state of the ONU corresponding to the resource occupation identifier of the first data resource is offline and a number of offline days is greater than a preset threshold.

The port information comprises: a PON port connected to the ONU to be registered and a slot in which a PON board having the PON port is plugged.

An embodiment of the present invention provides an apparatus for distributing optical network unit service information, including:
a first acquisition module, configured to acquire a registration request of an optical network unit, ONU, to be registered, and acquire a serial number, SN, of the ONU to be registered and port information about an optical line terminal, OLT, connected to the ONU to be registered according to the registration request; and
a processing module, configured to search a service data table for data resources having a resource occupation identifier of a preset value, and select one of the data resources having the resource occupation identifier of the preset value as a distributing resource and transmit the distributing resource to the ONU to be registered, wherein the resource occupation identifier of the preset value indicates that corresponding data resources are not occupied.

The processing module includes:
a selection module, configured to select the one of the data resources having the resource occupation identifier of the preset value;
a replacement module, configured to replace the resource occupation identifier corresponding to the selected data resource with the SN of the ONU to be registered, and take the data resource having the replaced resource occupation identifier as the distributing resource; and
a delivery module, configured to transmit the distributing resource to the ONU to be registered.

The apparatus for distributing optical network unit service information further includes:
a configuration module, configured to configure one service data table for each Passive Optical Network, PON, port of each PON board of the OLT, wherein the service data table comprises N data resources and N denotes a maximum splitting ratio of each PON port.

The apparatus for distributing optical network unit service information further includes:
a search module, configured to search in a predetermined cycle the service data table corresponding to each PON port of each PON board for a first data resource having the resource occupation identifier not of the preset value;
a second acquisition module, configured to acquire a login state of an ONU corresponding to the resource occupation identifier of the first data resource if the first data resource exists in the service data table; and
a change module, configured to change the resource occupation identifier of the first data resource to the preset value if the login state of the ONU corresponding to the resource occupation identifier of the first data resource is offline and a number of offline days is greater than a preset threshold.

The port information comprises: a PON port connected to the ONU to be registered and a slot where a PON board having the PON port is located.

An embodiment of the present invention provides an optical line terminal, including the apparatus for delivering optical network unit service information described above.

Embodiments of the present invention have the following advantageous effects:

According to the method for distributing optical network unit service information provided by embodiments of the present invention, the OLT selects one data resource not occupied by the ONU from the service data table according to the resource occupation identifier, takes the selected data resource as the distributing resource and delivers the distributing resource to the ONU to be registered, thereby completing the distributing of ONU service information. The present invention simplifies the ONU service distributing process, reduces the service fulfillment failure probability and shortens the service fulfillment time.

### BRIEF DESCRIPTION OF DRAWINGS

FIG. 1 is a flowchart illustrating distributing of ONU service information in the related art.
FIG. 2 is a first flowchart of a method for distributing optical network unit service information according to an embodiment of the present invention.
FIG. 3 is a schematic diagram illustrating an effect of a service data table in the method for distributing optical network unit service information according to an embodiment of the present invention.
FIG. 4 is a second flowchart of the method for distributing optical network unit service information according to an embodiment of the present invention.
FIG. 5 is a third flowchart of the method for distributing optical network unit service information according to an embodiment of the present invention.
FIG. 6 is a block structural diagram of an apparatus for distributing optical network unit service information according to an embodiment of the present invention.

### DETAILED DESCRIPTION

In order to make problems to be solved, solutions, advantages of the present invention more clear, detailed description is provided below with reference to embodiments and accompanying drawings.

A method and apparatus for distributing optical network unit service information and an optical line terminal provided by embodiments of the present invention solve problems of a cumbersome ONU service information distributing process and low service fulfillment efficiency in the related art.

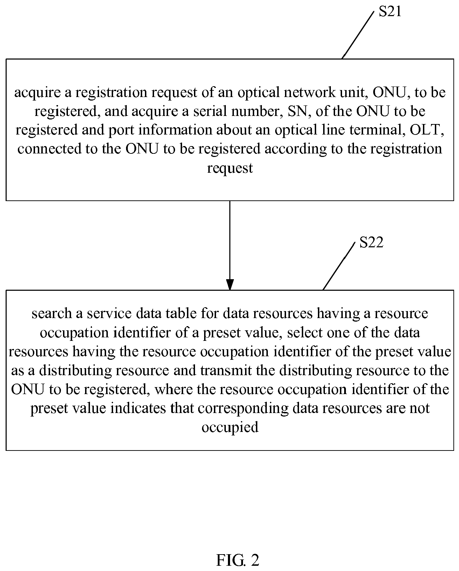

As shown in FIG. 2, the method for distributing optical network unit service information according to an embodiment of the present invention includes the following steps:

In step S21, a registration request of an optical network unit, ONU, to be registered is acquired, and a serial number, SN, of the ONU to be registered and port information about an optical line terminal, OLT, connected to the ONU to be registered are acquired according to the registration request.

The port information includes: a PON port connected to the ONU to be registered and a slot where a PON board having the PON port is located.

In step S22, a service data table is searched for data resources having a resource occupation identifier of a preset value, and one of the data resources having the resource occupation identifier of the preset value is selected as a distributing resource, and the distributing resource is delivered to the ONU to be registered. The resource occupation identifier of the preset value indicates that corresponding data resources are not occupied.

With an apparatus for distributing optical network unit service information provided by an embodiment of the present invention, simply after an accounting customer service agent of an operator completes service acceptance for a user and then the user obtains an ONU and connects the ONU to optical fibers, an network cable and a telephone line, the fulfillment of an fiber to the home optical network unit, FTTH ONU can be completed. Through the present invention, the user can enjoy various FTTH services without performing any professional configuration himself. The service information distributing process is greatly simplified.

Further, the step of selecting one of the data resources having the resource occupation identifier of the preset value as a distributing resource and transmitting the distributing resource to the ONU to be registered includes:
One of the data resources having the resource occupation identifier of the preset value is selected.

The resource occupation identifier corresponding to the selected data resource is replaced with the SN of the ONU to be registered, and the data resource having the replaced resource occupation identifier is taken as the distributing resource.

The delivery resource is transmitted to the ONU to be registered.

Further, before the step of acquiring the registration request of the ONU to be registered, the method further includes:
For each PON port of each PON board of the OLT, one service data table is configured. The service data table includes N data resources and N denotes a maximum splitting ratio of the PON port.

In the embodiment of the present invention, each ONU is preconfigured according to the maximum splitting ratio of each PON port of each PON board. For example, when the maximum splitting ratio is 64, 64 data resources are pre-added to each PON port. Each data resource includes: slot number of the PON board, PON port number, ONU number, ONU SN and other ONU service configuration data. The ONU SNs as the resource occupation identifiers are all set to the preset value, e.g., 0, by default. The ONU numbers increase progressively from 1 to 64. Other ONU service data is preconfigured according to service planning. The above configuration data may either be preconfigured by an apparatus developer when the OLT is delivered or be configured in batch using a batch data configuration tool provided by the apparatus developer after the fulfillment of the OLT is completed.

The following specifically describes an implementation process of the embodiment of the present invention.

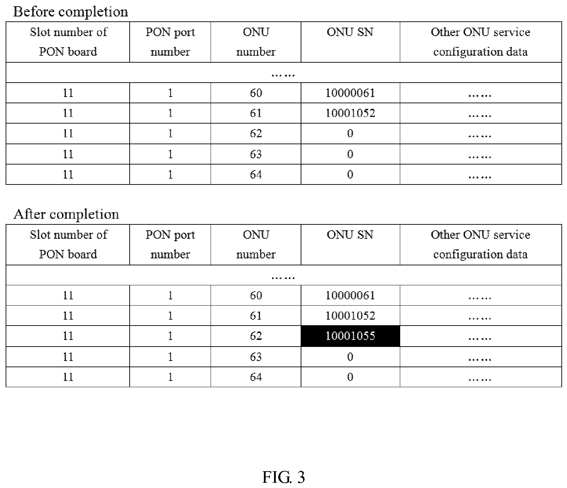

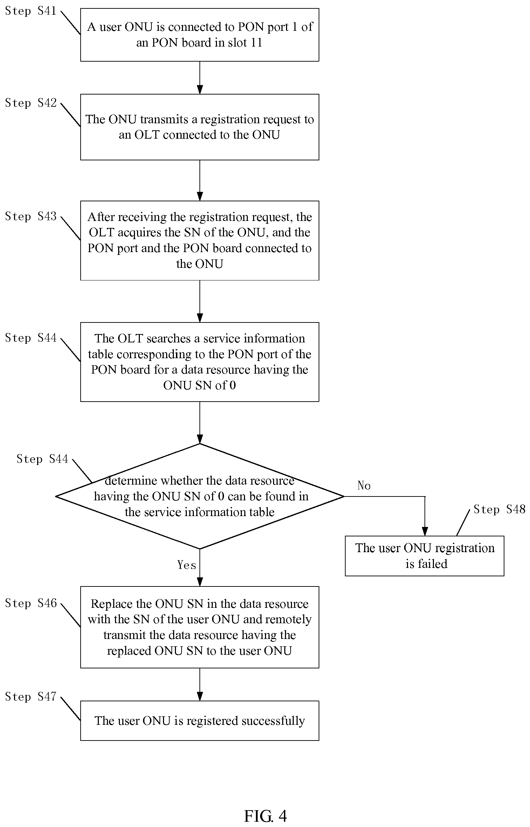

Assume that the SN of the user ONU is "10001055" and this user ONU is connected to PON port 1 of the PON board in slot 11 of the OLT through the optical fibers and optical splitter. As can be seen from FIG. 3, the maximum splitting ratio of the PON port is 64 and 61 ONUs have been configured and connected to the PON port before the distribution of the ONU service information is completed. As illustrated in FIG. 4, the embodiment of the present invention includes the following steps.

In step S41, the user ONU is connected to PON port 1 of the PON board in slot 11.

In step S42, the ONU transmits a registration request to the OLT to which the ONU is connected.

In step S43, after receiving the registration request, the OLT acquires the SN of the ONU, and the PON port and the PON board to which the ONU is connected.

In step S44, the OLT searches the service information table corresponding to the PON port of the PON board for a data resource having the ONU SN of 0.

In step S45, it is determined whether the data resource having the ONU SN of 0 can be found in the service information table.

In step S46, if the data resource having the ONU SN of 0 is found, the ONU SN in the data resource is replaced with the SN of the user ONU and the data resource having the replaced ONU SN is remotely delivered to the user ONU.

In step S47, the user ONU is registered successfully.

In step S48, if it fails to find the data resource having the ONU SN of 0, the user ONU registration is failed.

In the embodiment of the present invention, querying of the RMS system for acquiring of OLT device information and optical path information is not needed. When getting online, the ONU automatically reports, through an optical line, the SN to a device to which the ONU is physically connected. The device automatically selects the item having the ONU SN of 0, replaces the SN with the reported SN, and then transmits the data resource after ONU passes the authentication. The present invention does not require site operations by constructors, thus saving manpower costs.

In the specific embodiment of the present invention, since the SN of the ONU is no longer the unique identifier in the configuration level of the PON service and Layer 2 service and needs to be pre-specified, an ONU with any SN obtained by the user can access PON service and the Layer 2 service as long as the ONU is connected to optical fibers. Therefore, configurations of the EMS are not needed to be changed when the user dismantle the ONU, or replaces the ONU or when the backbone optical fiber needs to be pulled out and connected to another PON port in the case of an local PON board or PON port fault. In addition, as long as there exists a data resource having SN of 0 at the corresponding PON port, the PON port can be utilized by the ONU to registered, therefore, dirty data will occur inevitably. For example, if a data resource has been used previously, that is, the SN has been written in, but later the ONU corresponding to this SN is dismantled or replaced, then this data resource is invalid. However, since this SN is not 0, this data resource cannot be assigned to another new online ONU. In this way, this data resource as dirty data remains in the service data table of the OLT.

To solve the above problem, the method of the embodiment of the present invention further includes:
The service data table corresponding to each PON port of each PON board is searched in a predetermined cycle for a first data resource having the resource occupation identifier not of the preset value.

A login state of the ONU corresponding to the resource occupation identifier of the first data resource is acquired, if the first data resource exists in the service data table.

The resource occupation identifier of the first data resource is changed to the preset value if the login state of the ONU corresponding to the resource occupation identifier of the first data resource is offline and the number of offline days is greater than a preset threshold.

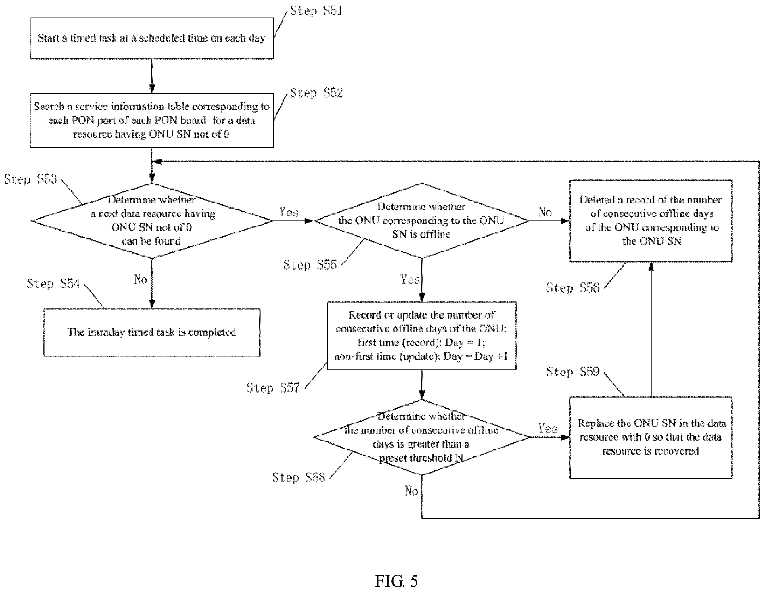

Specifically, as illustrated in FIG. 5, the method includes:
In step S51, a timed task is started at a scheduled time on each day.
In step S52, the service information table corresponding to each PON port of each PON board is searched for a data resource having ONU SN not of 0.
In step S53, whether a next data resource having ONU SN not of 0 can be found is determined.
In step S54, if the next data resource having ONU SN not of 0 cannot be found, the intraday timed task is completed.
In step S55, if the next data resource having ONU SN not of 0 can be found, whether the ONU corresponding to the ONU SN is offline is determined.
In step S56, if the ONU corresponding to the ONU SN is not offline, a record of the number of consecutive offline days of the ONU corresponding to the ONU SN is deleted.
In step S57, if the ONU corresponding to the ONU SN is offline, the number of consecutive offline days of the ONU is recorded or updated, with first time (recorded): Day = 1; non-first time (updated): Day = Day +1.
In step S58, whether the number of consecutive offline days is greater than a preset threshold N is determined.
In step S59, if the number of consecutive offline days is greater than the preset threshold N, the ONU SN in the data resource is replaced with 0 so that the data resource is recovered, and the process goes to step S56 and then to S53; if the number of consecutive offline days is less than the preset threshold N, the process goes to step S53.

In the embodiment of the present invention, a background task is started to periodically clear dirty data to recover data resources. This background task can be implemented on the OLT or the EMS. In addition, for this background task, if a data resource assigned to a certain ONU is mistakenly recovered, the OLT will find a new item having ONU SN of 0 and assign this new item to the ONU when the ONU gets online again, just as the ONU gets online for the first time.

The embodiment of the present invention is described more fully below in connection with specific operation and maintenance requirements and operation and maintenance scenarios.

### (1) On processing when the user applies for different service bandwidths

When the user applies for different service bandwidths, Digital Subscriber Line Access Multiplexer, DSLAM, services may be a reference. The restriction of the user bandwidths is mainly a restriction at a Broadband Remote Access Server, BRAS, and can be uniformly configured in the PON level according to a default maximum bandwidth.

### (2) On user authentication and user account security

When a validated user establishes an account in a service hall, the ONU SN information of the user can be recorded in the accounting system. After this, a format of Point-to-Point Protocol Over Ethernet, PPPoE, account number + reported positioning information can be defined so that when the user performs PPPoE dialing, the user device physical position (PON device IP + PON board + PON port + ONU number) is reported and meanwhile, the user ONU SN is also reported. After the first PPPoE dial-up authentication is successful, user device physical position, user device SN and user PPPoE account may be bound to each other on the BRAS. A specific binding strategy depends on a combination of a user account security strategy and operational flexibility. Preferably, only the SN and the PPPoE account are bound, because user services are not affected when the OLT central office replaces a PON port due to a device fault. Of course, for such binding strategy, if the user ONU is malfunction and needs to be replaced, a binding relationship between the SN and the PPPoE account needs to be reset through a background system when the user applies for a new ONU in the service hall. When an invalid user casually connects an ONU to optical fibers at the user's home, since the user does not have the PPPoE account, the user ultimately cannot enjoy the Internet or other services even if the OLT has authenticated the ONU.

### (3) On ONU positioning when the user reports a fault

Specifically, either of the following two schemes may be adopted to position the ONU. One is to position the ONU according to the ONU SN. When services are fulfilled for the user, the ONU SN can be recorded in the accounting system. After the user reports the fault, the SN of the ONU can be found according to the user's resource information, and then the ONU can be positioned in the EMS according to the SN. Therefore, when dirty data is recovered in the embodiment of the present invention, the recovery period needs to be set to a reasonable value that should not too small; otherwise, the ONU SN will be quickly recovered and fault positioning will be difficult. The other positioning scheme is to collect, through BRAS records, physical position information reported by PPPoE+. When a subsequent user reports a fault, the ONU can be quickly positioned by querying the physical position information collected before.

### (4) On central office OLT faults

When the central office OLT is faulty, PON port removal is performed. In this case, no data configuration is required and the backbone fiber is connected to another PON port. All ONUs connected to this fiber automatically reacquire ONU configuration data assignment by the new PON port. However, if, after the original faulty PON port is restored, services needs to be provided to a new user, automatic assignment cannot be provided to the new connected ONU, because the restored faulty PON port still has original ONU configuration data and all ONU SNs are not 0 due to the need for a period of time in which the ONU dirty data is recovered. At this time, the OLT can select one of offline ONUs, regards the configuration data of this offline ONU as a data resource with an SN of 0 and performs configuration data assignment of the new ONU using this data resource.

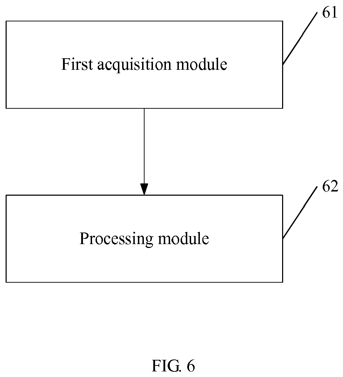

Another embodiment of the present invention provides an apparatus for distributing optical network unit service information. As illustrated in FIG. 6, the apparatus includes:
a first acquisition module 61, configured to acquire a registration request of an optical network unit, ONU, to be registered, and acquire a serial number, SN, of the ONU to be registered and port information about an optical line terminal, OLT, connected to the ONU to be registered according to the registration request; and
a processing module 62, configured to search a service data table for data resources having a resource occupation identifier of a preset value, and select one of the data resources having the resource occupation identifier of the preset value as a distributing resource and transmit the distributing resource to the ONU to be registered, wherein the resource occupation identifier of the preset value indicates that corresponding data resources are not occupied.

The processing module 62 includes:
a selection module, configured to select the one of the data resources having the resource occupation identifier of the preset value.
a replacement module, configured to replace the resource occupation identifier corresponding to the selected data resource with the SN of the ONU to be registered, and take the data resource having the replaced resource occupation identifier as the delivery resource.
a delivery module, configured to transmit the delivery resource to the ONU to be registered.

The apparatus for distributing optical network unit service information further includes:
a configuration module, configured to configure one service data table for each Passive Optical Network, PON, port of each PON board of the OLT, wherein the service data table comprises N data resources and N denotes a maximum splitting ratio of each PON port.

The apparatus for distributing optical network unit service information further includes:
a search module, configured to search in a predetermined cycle the service data table corresponding to each PON port of each PON board for a first data resource having the resource occupation identifier not of the preset values;
a second acquisition module, configured to acquire a login state of an ONU corresponding to the resource occupation identifier of the first data resource if the first data resource exists in the service data table; and
a change module, configured to change the resource occupation identifier of the first data resource to the preset value if the login state of the ONU corresponding to the resource occupation identifier of the first data resource is offline and a number of offline days is greater than a preset threshold.

The port information includes: a PON port connected to the ONU to be registered and a slot where a PON board having the PON port is located.

Another embodiment of the present invention provides an optical line terminal, including the apparatus for distributing optical network unit service information described above.

It is to be noted that the apparatus and the optical line terminal are the apparatus and terminals corresponding to the above method embodiments. All implementation modes in the method embodiments are applicable to embodiments of the apparatus and the optical line terminal, which can achieve the same effect.

The method and apparatus for distributing optical network unit service information and the optical line terminal provided by embodiments of the present invention simplify the ONU service distributing process, reduce the service fulfillment failure probability and shorten the service fulfillment time.

The above are only preferred embodiments of the present invention and are not intended to limit the present invention. Any modifications, improvements within the principle of the present invention are within the scope of the present invention.

### INDUSTRIAL APPLICABILITY

The method and apparatus for delivering optical network unit service information and the optical line terminal provided by embodiments of the present invention have the advantageous effects of solving problems in the related art that the ONU service information distribution process is cumbersome and the service fulfillment efficiency is low, simplifying the ONU service distributing process, reducing the service fulfillment failure rate and shortening the service fulfillment time.

## Claims

1. A method for registering an optical network unit, ONU, to an optical line terminal, OLT, in a passive optical network, PON, wherein the OLT has a plurality of PON boards, each of the plurality of PON boards has a plurality of PON ports, each of the plurality of PON ports is configured with a service data table which comprises a plurality of data resources, **characterised in that**, the method comprises:
acquiring (S21), by the OLT, a registration request of the ONU to be registered, and acquiring a serial number, SN, of the ONU to be registered and information about the PON port connected to the ONU to be registered and information about a slot in which the PON board having the PON port is plugged according to the registration request; and
searching (S22), by the OLT, the service data table of the PON port connected to the ONU for data resources having a resource occupation identifier of a preset value, selecting one of the data resources having the resource occupation identifier of the preset value as a distributing resource and transmitting the distributing resource to the ONU to be registered, wherein the resource occupation identifier of the preset value indicates that corresponding data resources are not occupied,
wherein the step of selecting one of the data resources having the resource occupation identifier of the preset value as a distributing resource and transmitting the distributing resource to the ONU to be registered comprises:
selecting one of the data resources having the resource occupation identifier of the preset value;
replacing the resource occupation identifier of the selected data resource with the SN of the ONU to be registered, and taking the data resource having the replaced resource occupation identifier as the distributing resource; and
transmitting the distributing resource to the ONU to be registered.

2. The method according to claim 1, wherein, before the step of acquiring the registration request of the ONU to be registered, the method further comprises:
configuring the service data table for each PON port of each PON board of the OLT, wherein the service data table comprises N data resources and N denotes a maximum splitting ratio of each PON port.

3. The method according to claim 2, further comprising:
searching in a predetermined cycle the service data table of each PON port of each PON board for a first data resource whose resource occupation identifier is not the preset value;
acquiring a login state of an ONU corresponding to the resource occupation identifier of the first data resource if the first data resource exists in the service data table; and
changing the resource occupation identifier of the first data resource to the preset value if the login state of the ONU corresponding to the resource occupation identifier of the first data resource is offline and a number of offline days is greater than a preset threshold.

4. An apparatus for processing a registering of an optical network unit, ONU, wherein the apparatus is applied in an optical line terminal, OLT, in a passive optical network, PON, wherein the OLT has a plurality of PON boards, each of the plurality of PON boards has a plurality of PON ports, and each of the plurality of PON ports is configured with a service data table which comprises a plurality of data resources, **characterised in that**, the apparatus comprises:
a first acquisition module (61), configured to acquire a registration request of the ONU to be registered, and acquire a serial number, SN, of the ONU to be registered and information about the PON port connected to the ONU to be registered and information about a slot in which the PON board having the PON port is plugged according to the registration request; and
a processing module (62), configured to search the service data table of the PON port connected to the ONU for data resources having a resource occupation identifier of a preset value, and select one of the data resources having the resource occupation identifier of the preset value as a distributing resource and transmit the distributing resource to the ONU to be registered, wherein the resource occupation identifier of the preset value indicates that corresponding data resources are not occupied,
wherein the processing module comprises:
a selection module, configured to select one of the data resources having the resource occupation identifier of the preset value;
a replacement module, configured to replace the resource occupation identifier of the selected data resource with the SN of the ONU to be registered, and take the data resource having the replaced resource occupation identifier as the distributing resource; and
a delivery module, configured to transmit the distributing resource to the ONU to be registered.

5. The apparatus according to claim 4, further comprising:
a configuration module, configured to configure one service data table for each PON port of each PON board of the OLT, wherein the service data table comprises N data resources and N denotes a maximum splitting ratio of each PON port.

6. The apparatus according to claim 5, further comprising:
a search module, configured to search in a predetermined cycle the service data table of each PON port of each PON board for a first data resource whose resource occupation identifier is not the preset value;
a second acquisition module, configured to acquire a login state of an ONU corresponding to the resource occupation identifier of the first data resource if the first data resource exists in the service data table; and
a change module, configured to change the resource occupation identifier of the first data resource to the preset value if the login state of the ONU corresponding to the resource occupation identifier of the first data resource is offline and a number of offline days is greater than a preset threshold.

7. An optical line terminal, comprising the apparatus for processing a registering of an ONU of any one of claims 4 to 6.

## Patentansprüche

1. Verfahren zum Registrieren einer optischen Netzwerkeinheit, ONU, in einem optischen Leitungsendgerät, OLT, in einem passiven optischen Netzwerk, PON, wobei das OLT eine Vielzahl von PON-Platinen aufweist, wobei jede der Vielzahl von PON-Platinen eine Vielzahl von PON-Ports aufweist, wobei jeder der Vielzahl von PON-Ports mit einer Dienstdatentabelle konfiguriert ist, die eine Vielzahl von Datenressourcen umfasst, **dadurch gekennzeichnet, dass** das Verfahren umfasst:
Erfassen (S21), durch das OLT, einer Registrierungsanfrage der zu registrierenden ONU, und Erfassen einer Seriennummer, SN, der zu registrierenden ONU, und Informationen über den PON-Port, der mit der zu registrierenden ONU verbunden ist, und Informationen über einen Slot, in den die PON-Platine, die den PON-Port aufweist, gemäß der Registrierungsanfrage eingesteckt ist; und
Suchen (S22), durch das OLT, der Dienstdatentabelle des PON-Ports, der mit der ONU verbunden ist, nach Datenressourcen, die eine Ressourcenbelegungskennung mit einem voreingestellten Wert aufweisen, Auswählen einer der Datenressourcen, die die Ressourcenbelegungskennung mit dem voreingestellten Wert aufweist, als Verteilungsressource, und Übertragen der Verteilungsressource an die zu registrierende ONU, wobei die Ressourcenbelegungskennung mit dem voreingestellten Wert darauf hinweist, dass die entsprechenden Datenressourcen nicht belegt sind,
wobei der Schritt des Auswählens einer der Datenressourcen, die die Ressourcenbelegungskennung mit dem voreingestellten Wert aufweisen, als Verteilungsressource und das Übertragen der Verteilungsressource an die zu registrierende ONU umfasst:
Auswählen einer der Datenressourcen, die die Ressourcenbelegungskennung mit dem voreingestellten Wert aufweist;
Ersetzen der Ressourcenbelegungskennung der ausgewählten Datenressource mit der SN der zu registrierenden ONU und Übernehmen der Datenressource, die die ersetzte Ressourcenbelegungskennung aufweist, als die Verteilungsressource; und
Übertragen der Verteilungsressource an die zu registrierende ONU.

2. Verfahren nach Anspruch 1, wobei das Verfahren vor dem Schritt des Erfassens der Registrierungsanfrage der zu registrierenden ONU weiter umfasst:
Konfigurieren der Dienstdatentabelle für jeden PON-Port jeder PON-Platine des OLT, wobei die Dienstdatentabelle N Datenressourcen umfasst, und N ein maximales Teilungsverhältnis jedes PON-Ports bezeichnet.

3. Verfahren nach Anspruch 2, weiter umfassend:
Suchen, in einem vorbestimmten Zyklus, der Dienstdatentabelle jedes PON-Ports jeder PON-Platine nach einer ersten Datenressource, deren Ressourcenbelegungskennung nicht der voreingestellte Wert ist;
Erfassen eines Login-Zustands einer ONU entsprechend der Ressourcenbelegungskennung der ersten Datenressource, falls die erste Datenressource in der Dienstdatentabelle existiert; und
Ändern der Ressourcenbelegungskennung der ersten Datenressource auf den voreingestellten Wert, falls der Login-Zustand der ONU, die der Ressourcenbelegungskennung der ersten Datenressource entspricht, offline ist, und eine Anzahl von Offline-Tagen größer als ein voreingestellter Schwellenwert ist.

4. Einrichtung zum Verarbeiten einer Registrierung einer optischen Netzwerkeinheit, ONU, wobei die Einrichtung in einem optischen Leitungsendgerät, OLT, in einem passiven optischen Netzwerk, PON, angewendet wird, wobei das OLT eine Vielzahl von PON-Platinen aufweist, wobei jede der Vielzahl von PON-Platinen eine Vielzahl von PON-Ports aufweist, und jeder der Vielzahl von PON-Ports mit einer Dienstdatentabelle konfiguriert ist, die eine Vielzahl von Datenressourcen umfasst, **dadurch gekennzeichnet, dass** die Einrichtung umfasst:
ein erstes Erfassungsmodul (61), das konfiguriert ist, um eine Registrierungsanfrage der zu registrierenden ONU zu erfassen, und eine Seriennummer, SN, der zu registrierenden ONU, und Informationen über den PON-Port zu erfassen, der mit der zu registrierenden ONU verbunden ist, und Informationen über einen Slot, in den die PON-Platine, die den PON-Port aufweist, gemäß der Registrierungsanfrage eingesteckt ist; und
ein Verarbeitungsmodul (62), das konfiguriert ist, um die Dienstdatentabelle des PON-Ports, der mit der ONU verbunden ist, nach Datenressourcen zu durchsuchen, die eine Ressourcenbelegungskennung mit einem voreingestellten Wert aufweisen, und eine aus den Datenressourcen, die die Ressourcenbelegungskennung mit einem voreingestellten Wert aufweist, als Verteilungsressource auszuwählen, und die Verteilungsressource an die zu registrierende ONU zu übertragen, wobei die Ressourcenbelegungskennung mit dem voreingestellten Wert darauf hinweist, dass die entsprechenden Datenressourcen nicht belegt sind,
wobei das Verarbeitungsmodul umfasst:
ein Auswahlmodul, das konfiguriert ist, um eine der Datenressourcen, die die Ressourcenbelegungskennung mit dem voreingestellten Wert aufweist, auszuwählen,
ein Ersetzungsmodul, das konfiguriert ist, um die Ressourcenbelegungskennung der ausgewählten Datenressource mit der SN der zu registrierenden ONU zu ersetzen, und die Datenressource, die die ersetzte Ressourcenbelegungskennung aufweist, als die Verteilungsressource zu übernehmen; und
ein Liefermodul, das konfiguriert ist, um die Verteilungsressource an die zu registrierende ONU zu übertragen.

5. Einrichtung nach Anspruch 4, weiter umfassend:
ein Konfigurationsmodul, das konfiguriert ist, um eine Dienstdatentabelle für jeden PON-Port jeder PON-Platine des OLT zu konfigurieren, wobei die Dienstdatentabelle N Datenressourcen umfasst, und N ein maximales Teilungsverhältnis jedes PON-Ports bezeichnet.

6. Einrichtung nach Anspruch 5, weiter umfassend:
ein Suchmodul, das konfiguriert ist, um in einem vorbestimmten Zyklus die Dienstdatentabelle jedes PON-Ports jeder PON-Platine für eine erste Datenressource, deren Ressourcenbelegungskennung nicht der voreingestellte Wert ist, zu suchen;
ein zweites Erfassungsmodul, das konfiguriert ist, um einen Login-Zustand einer ONU entsprechend der Ressourcenbelegungskennung der ersten Datenressource zu erfassen, falls die erste Datenressource in der Dienstdatentabelle existiert; und
ein Änderungsmodul, das konfiguriert ist, um die Ressourcenbelegungskennung der ersten Datenressource auf den voreingestellten Wert zu ändern, falls der Login-Zustand der ONU, die der Ressourcenbelegungskennung der ersten Datenressource entspricht, offline ist, und eine Anzahl von Offline-Tagen größer als ein voreingestellter Schwellenwert ist.

7. Optisches Leitungsendgerät, die Einrichtung zur Verarbeitung einer Registrierung einer ONU nach einem der Ansprüche 4 bis 6 umfassend.

## Revendications

1. Méthode pour enregistrer une unité de réseau optique, ONU, sur un terminal de ligne optique, OLT, dans un réseau optique passif, PON, dans laquelle l'OLT a une pluralité de cartes PON, chacune de la pluralité de cartes PON a une pluralité de ports PON, chacun de la pluralité de ports PON est configuré avec une table de données de service qui comprend une pluralité de ressources de données, **caractérisée en ce que**, la méthode comprend :
l'acquisition (S21), par l'OLT, d'une demande d'enregistrement de l'ONU à enregistrer, et l'acquisition d'un numéro de série, SN, de l'ONU à enregistrer et d'informations sur le port PON connecté à l'ONU à enregistrer et d'informations sur un logement dans lequel la carte PON ayant le port PON est branchée selon la demande d'enregistrement ; et
la recherche (S22), par l'OLT, dans la table de données de service du port PON connecté à l'ONU de ressources de données ayant un identificateur d'occupation de ressource d'une valeur prédéfinie, la sélection de l'une des ressources de données ayant l'identificateur d'occupation de ressource de la valeur prédéfinie comme une ressource de distribution et la transmission de la ressource de distribution à l'ONU à enregistrer, dans laquelle l'identificateur d'occupation de ressource de la valeur prédéfinie indique que des ressources de données correspondantes ne sont pas occupées,
dans laquelle l'étape de sélection de l'une des ressources de données ayant l'identificateur d'occupation de ressource de la valeur prédéfinie comme une ressource de distribution et de transmission de la ressource de distribution à l'ONU à enregistrer comprend :
la sélection de l'une des ressources de données ayant l'identificateur d'occupation de ressource de la valeur prédéfinie ;
le remplacement de l'identificateur d'occupation de ressource de la ressource de données sélectionnée par le SN de l'ONU à enregistrer, et le fait de prendre la ressource de données ayant l'identificateur d'occupation de ressource remplacé comme la ressource de distribution ; et
la transmission de la ressource de distribution à l'ONU à enregistrer.

2. Méthode selon la revendication 1, dans laquelle, avant l'étape d'acquisition de la demande d'enregistrement de l'ONU à enregistrer, la méthode comprend en outre :
la configuration de la table de données de service pour chaque port PON de chaque carte PON de l'OLT, dans laquelle la table de données de service comprend N ressources de données et N désigne un rapport de splittage maximum de chaque port PON.

3. Méthode selon la revendication 2, comprenant en outre :
la recherche dans un cycle prédéterminé dans la table de données de service de chaque port PON de chaque carte PON d'une première ressource de données dont l'identificateur d'occupation de ressource n'est pas la valeur prédéfinie ;
l'acquisition d'un état de connexion d'une ONU correspondant à l'identificateur d'occupation de ressource de la première ressource de données si la première ressource de données existe dans la table de données de service ; et
le changement de l'identificateur d'occupation de ressource de la première ressource de données à la valeur prédéfinie si l'état de connexion de l'ONU correspondant à l'identificateur d'occupation de ressource de la première ressource de données est hors ligne et qu'un nombre de jours hors ligne est supérieur à un seuil prédéfini.

4. Appareil pour traiter un enregistrement d'une unité de réseau optique, ONU, dans lequel l'appareil est appliqué dans un terminal de ligne optique, OLT, dans un réseau optique passif, PON, dans lequel l'OLT a une pluralité de cartes PON, chacune de la pluralité de cartes PON a une pluralité de ports PON, et chacun de la pluralité de ports PON est configuré avec une table de données de service qui comprend une pluralité de ressources de données, **caractérisé en ce que**, l'appareil comprend :
un premier module d'acquisition (61), configuré pour acquérir une demande d'enregistrement de l'ONU à enregistrer, et acquérir un numéro de série, SN, de l'ONU à enregistrer et des informations sur le port PON connecté à l'ONU à enregistrer et des informations sur un logement dans lequel la carte PON ayant le port PON est branchée selon la demande d'enregistrement ; et
un module de traitement (62), configuré pour rechercher dans la table de données de service du port PON connecté à l'ONU des ressources de données ayant un identificateur d'occupation de ressource d'une valeur prédéfinie, et sélectionner l'une des ressources de données ayant l'identificateur d'occupation de ressource de la valeur prédéfinie comme une ressource de distribution et transmettre la ressource de distribution à l'ONU à enregistrer, dans lequel l'identificateur d'occupation de ressource de la valeur prédéfinie indique que des ressources de données correspondantes ne sont pas occupées,
dans lequel le module de traitement comprend :
un module de sélection, configuré pour sélectionner l'une des ressources de données ayant l'identificateur d'occupation de ressource de la valeur prédéfinie ;
un module de remplacement, configuré pour remplacer l'identificateur d'occupation de ressource de la ressource de données sélectionnée par le SN de l'ONU à enregistrer, et prendre la ressource de données ayant l'identificateur d'occupation de ressource remplacé comme la ressource de distribution ; et
un module de remise, configuré pour transmettre la ressource de distribution à l'ONU à enregistrer.

5. Appareil selon la revendication 4, comprenant en outre :
un module de configuration, configuré pour configurer une table de données de service pour chaque port PON de chaque carte PON de l'OLT, dans lequel la table de données de service comprend N ressources de données et N désigne un rapport de splittage maximum de chaque port PON.

6. Appareil selon la revendication 5, comprenant en outre :
un module de recherche, configuré pour rechercher dans un cycle prédéterminé dans la table de données de service de chaque port PON de chaque carte PON une première ressource de données dont l'identificateur d'occupation de ressource n'est pas la valeur prédéfinie ;
un second module d'acquisition, configuré pour acquérir un état de connexion d'une ONU correspondant à l'identificateur d'occupation de ressource de la première ressource de données si la première ressource de données existe dans la table de données de service ; et
un module de changement, configuré pour changer l'identificateur d'occupation de ressource de la première ressource de données à la valeur prédéfinie si l'état de connexion de l'ONU correspondant à l'identificateur d'occupation de ressource de la première ressource de données est hors ligne et qu'un nombre de jours hors ligne est supérieur à un seuil prédéfini.

7. Terminal de ligne optique, comprenant l'appareil pour traiter un enregistrement d'une ONU de l'une quelconque des revendications 4 à 6.
